Europäisches Patentamt

European Patent Office

Office européen des brevets

(11) Publication number: **0 434 974 A1**

# EUROPEAN PATENT APPLICATION

(21) Application number: **90122205.9**

(51) Int. Cl.⁵: **G06K 19/077**

(22) Date of filing: **20.11.90**

(30) Priority: **30.11.89 JP 309134/89**

(43) Date of publication of application:
**03.07.91 Bulletin 91/27**

(84) Designated Contracting States:
**DE FR GB**

(71) Applicant: **Kabushiki Kaisha Toshiba**
**72, Horikawa-cho Saiwai-ku**
**Kawasaki-shi(JP)**

(72) Inventor: **Kubodera, Yoshiro, c/o Intellectual**
**Property Div.**
**Kabushiki Kaisha Toshiba, 1-1 Shibaura**
**1-chome**
**Minato-ku, Tokyo 105(JP)**

(74) Representative: **Henkel, Feiler, Hänzel &**
**Partner**
**Möhlstrasse 37**
**W-8000 München 80(DE)**

(54) Card having emboss portion and its manufacturing method.

(57) An emboss portion (23), which has a transparent resin layer (24) and a colored resin layer (25) stacked on the transparent resin layer (24), is formed in a card body (11). Sequentially, the emboss portion (23) is cut, thereby forming a desired embossing pattern (16) having two resin layers (24, 25).

F I G.   4

EP 0 434 974 A1

## CARD HAVING EMBOSS PORTION AND ITS MANUFACTURING METHOD

The present invention relates to a card having an emboss portion such as an IC card and a magnetic card, and the like, and its manufacturing method. There has been recently made to fit for practical use an IC card, which has a liquid crystal display and a keyboard, and which can be used in not only an on-line state but also an off-line state, as a multifunction card.

Such an IC card has a card base made of, for example, plastic material, in which a semiconductor chip constituting a microcomputer and a memory, and the like is embedded, inside a pocket-sized metallic panel. In the front surface portion of the card, there are provided a plurality of external terminals for data transmission or reception to or from an external device and for a power supply input. In the rear surface portion of the card, a keyboard and a liquid crystal display are incorporated. Then, the microcomputer is operated in an manual manner (off-line state) without using a reader/writer, thereby confirming the content of the memory.

Moreover, in consideration of using both IC card and existing magnetic card, for example, a cash card or a credit card, there are provided a magnetic strip storing magnetic data in the front surface, and an emboss character (embossing pattern) showing a name of the card owner and a registration number.

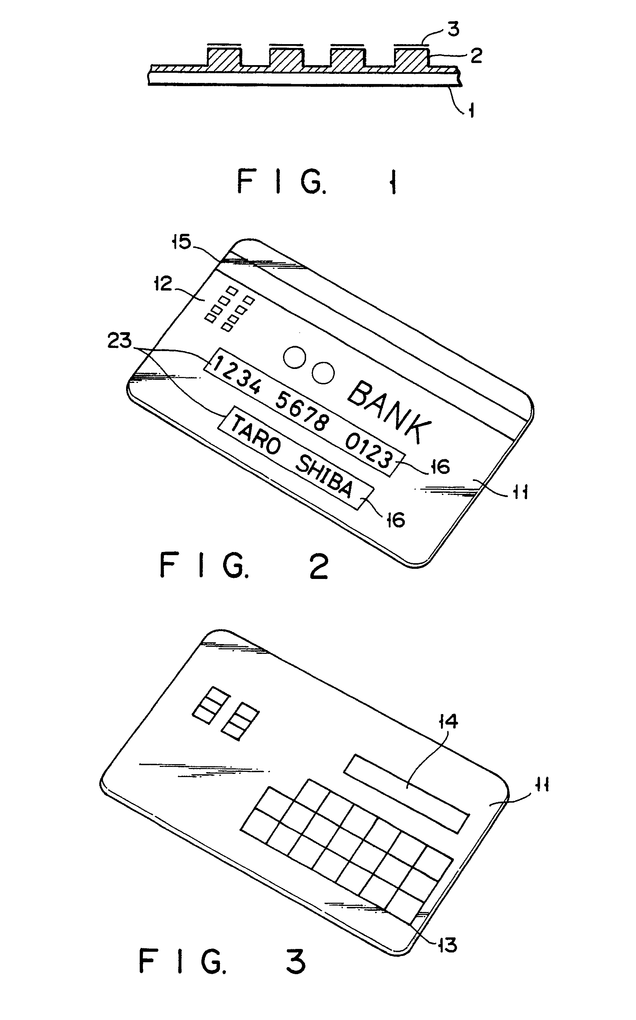

As shown in Fig. 1, the emboss character in the IC card is formed of a transparent photosensitive resin layer 2, which is formed on the surface of a card 1, and a colored thin film layer 3, which is formed on the surface of the photosensitive resin layer 2. In this case, to form the emboss portion, there is used a method in which a mask is used and resin is cast in the mask. However, since it is difficult to form the thickness the resin layer 2 uniform, only resin is hardened in a practical use, thereafter, the thickness of the resin layer is made to be uniform by cutting and the colored resin is printed thereon, thereby forming the thin film layer 3. However, in such IC card 1, since the thin film layer 3 forming of the colored resin of the emboss character is extremely thin, the color fades while the card is being used, thereby makes it difficult to read the emboss character.

The present invention has been made to overcome the above problem. An object of the present invention is to provide a card having an emboss portion, which can easily read an embossing pattern even if the head of the embossing pattern is a little cut out and its entire height is reduced during the use of the card, and its manufacturing method.

The card having an emboss portion according to the present invention comprises a card body, and an emboss portion formed on said card body, said emboss portion having a transparent first resin layer and a colored second resin layer formed on the first resin layer, wherein an embossing pattern having said two resin layers is formed by cutting said emboss portion into a desired pattern, has said two resin layers.

The method for manufacturing the card having an emboss portion according to the present invention comprises the steps of: forming a transparent resin layer on an emboss portion of a card body; forming a colored resin layer on said transparent resin layer; and forming a desired embossing pattern by cutting said two layers of said emboss portion.

This invention can be more fully understood from the following detailed description when taken in conjunction with the accompanying drawings, in which:

Fig. 1 is a cross sectional view showing an embossing pattern in a conventional IC card;

Fig. 2 is a perspective view showing a front surface of an IC card according to an embodiment of the present invention;

Fig. 3 is a perspective view showing a rear surface of Fig. 2.

Fig. 4 is an enlarged perspective view showing an emboss character forming portion of the IC card according to the embodiment of the present invention;

Fig. 5 is a flow chart explaining a manufacturing process of the emboss character;

Fig. 6 is a view showing a front panel of the IC card relating to the embodiment of the present invention;

Fig. 7 is a side cross sectional view showing the emboss portion of the IC card according to the embodiment of the present invention;

Fig. 8 is a side cross sectional view showing the emboss character;

Fig. 9 is an exploded view explaining the structure of the IC card according to the embodiment of the present invention;

Fig. 10 is a view showing the inner structure of the IC card seen from the front side according to the embodiment of the present invention;

Fig. 11 is a front view showing a cutting device for forming the emboss character; and

Fig. 12 is a side view of the cutting device.

An embodiment of the present invention will be explained with reference to the drawings.

Figs. 2 and 3 are views showing an IC card as an example of a card having an emboss portion according to the present invention. Fig. 2 shows the front surface and Fig. 3 shows the rear surface of the IC card.

An IC card 11 has a card base formed of, for example, plastic material inside a pocket-sided metallic panel. In the card base, a semiconductor chip such as a microcomputer and a memory, and the like is embedded. In the front surface portion of the card, there are provided a plurality of external terminals 12 for data transmission or reception to or from an external device and for a power supply input. In the rear surface portion of the card, a keyboard 13 and a liquid crystal display window 14 are incorporated. Then, the microcomputer is operated in an manual manner (off-line state) without using a reader/writer, thereby confirming the content of storage. In other words, this card can be used as the so-called multifunction card.

Moreover, in consideration of using both IC card and conventional magnetic card, for example, a cash card or a credit card, on the rear surface of the IC card 11, there are provided a magnetic stripe 15 storing magnetic data in the front surface, and an emboss character (embossing pattern) 16 showing a name of the card owner. The emboss character 16 includes a convex character, a number, and a mark formed by cutting an emboss portion 23 explained later. The emboss character 16 is normally recorded in the card 11 every owner after the card 11 is assembled.

Fig. 4 is an enlarged view showing a portion in which the emboss character 16 of the card is formed.

The emboss character 16 is formed in the emboss portion 23, and has a two-layered structure in which a transparent resin layer 24 and a colored resin layer 25 are stacked. These resin layers 24 and 25 are formed of, for example, photosensitive resin. In such a two-layered structure, the resin layer 25 can be formed to have a certain degree of thickness. For this reason, the character color can be clearly embossed. Moreover, even if pressure is applied on the surface of the character by an imprinter and the surface is rubbed, the color does not fade and the emboss character 16 can be easily read for a long time.

An example of the manufacturing process of such an emboss character will be explained as follows:

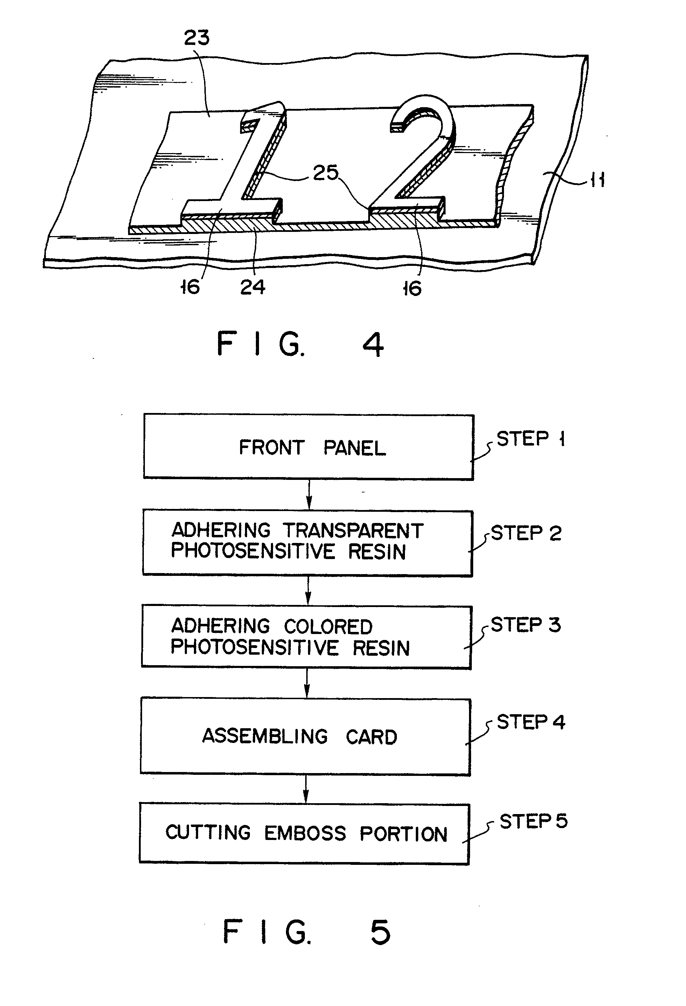

As shown in Fig. 5, this process comprises STEPS 1 to 5.

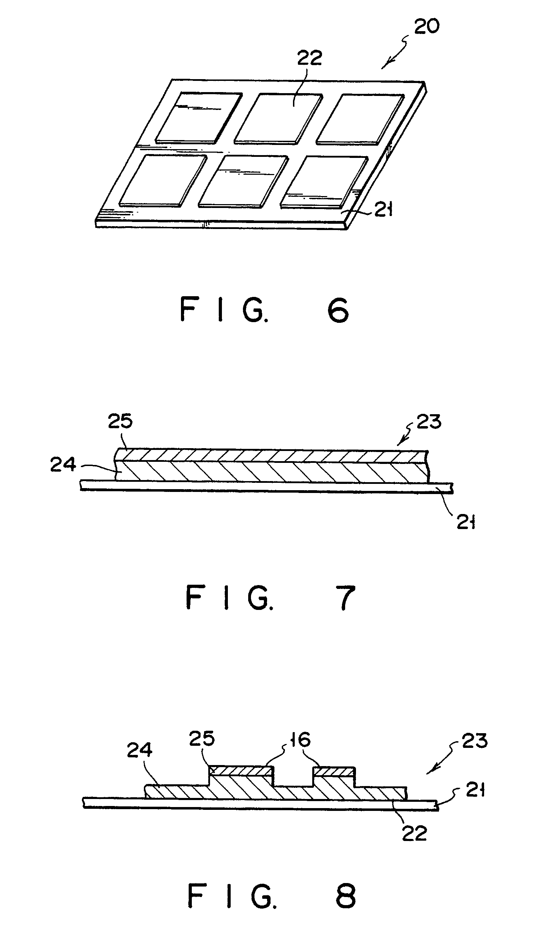

First, a front panel (metallic panel) which is a structural portion of IC card is formed (STEP 1). As shown in Fig. 6, a front panel 20 is formed by providing a predetermined design print to a front panel substrate 21 made of stainless.

Thereafter, in STEP 2, transparent photosensitive resin is printed on the front panel 20 by, for example, a screen print, and is adhered and hardened, so that a first resin layer 24 is formed.

In STEP 3, colored photosensitive resin is printed on the first resin layer by the screen print, and is adhered and hardened, so that a second resin layer 25 is formed. Thereby, the emboss portion 23 having two-layered structure of the transparent first resin layer 24 and the colored second resin layer 25 is formed as shown in Fig. 7. The hardening of resin is made by radiating light to the resin layers generally, by radiating ultraviolet rays to the resin layers from an ultraviolet lamp.

In STEP 4, a module for an IC card such as a semi-conductor chip and other parts are stacked on the front panel 20, and the IC card is stacked. The assembly of the IC card will be explained later.

Sequentially, in STEP 5, the emboss portion 23 is cut in accordance with data of the person to be a card owner and the emboss character 16 is formed as shown in Fig. 8.

It is general that STEP 5 is performed by a card maker based on data which is supplied from a publisher. The card maker and the publisher may be the same.

The emboss character 16 is formed in such a manner that the emboss character 16 is cut as a part of the transparent photosensitive resin layer 24 is left. In this case, since the emboss character 16 is cut as a part of the transparent photosensitive resin layer 24 is left, strength of adhesion is increased and the emboss character cannot be easily peeled from the card as compared with the case in which the emboss character itself is formed on the card. Moreover, since the resin layer 24 is transparent, designs of banks or credit companies, which are printed in the front panel 21, are not damaged. Also, since two-layered structure having resin layers 24 and 25 is formed, the emboss character is not easily peeled from the card as compared with the case, in which a metal foil is thermally adhered, and such the emboss character can be easily seen.

The assembly of the IC card in STEP 4 will be explained as follows.

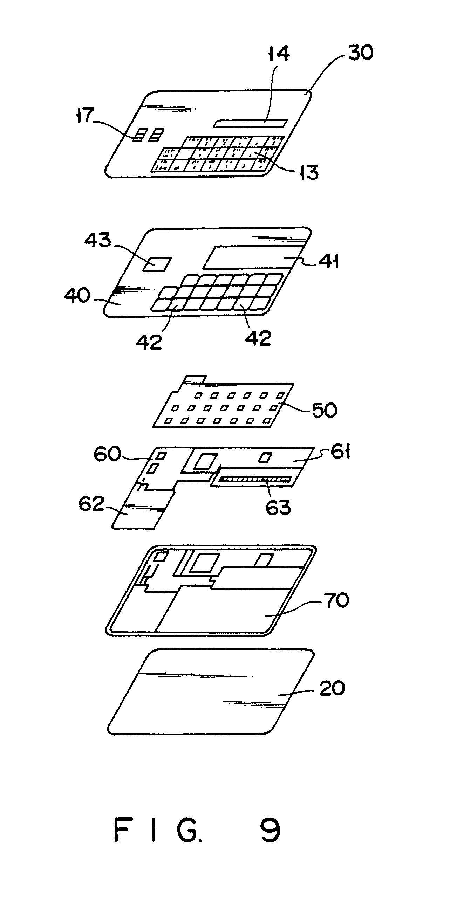

Fig. 9 is an exploded view explaining the structure of the IC card.

In Fig. 9, reference numeral 30 is a back panel. In the back panel 30, there are provided a display window 14, a keyboard 4, and an opening 17 which is formed to project a contact 21 (explained later). On the display window 4, the balance at the bank, the term of validity, and data on the transaction up to the present are displayed.

In the drawing, reference numeral 40 is a spacer. In the spacer 40, there is provided an opening 41 corresponding to the display window 14. Moreover, in the spacer 40, there is provided an opening 43 which is communicated with a number of openings 42, through which the keys of the keyboard 13 are inserted, and the opening 17 of the back panel 30.

Reference numeral 50 is a membrane switch, which is turned on or off by the operation of the keyboard 13.

Reference numeral 60 is a flexible printed circuit board (FPC). A main printed wiring board (TAB substrate) 61 and a battery 62 are connected to the FPC 60. Also, a liquid crystal display (LDC) 63 and the membrane 50 are connected to the main printed wiring board 61. The liquid crystal display corresponds to the display window 14.

Reference numeral 70 is a plastic dam which is injection-molded. The plastic dam constitutes the outer periphery of the IC card. Then, the above-mentioned front panel 20 is overlay on the plastic dam 70.

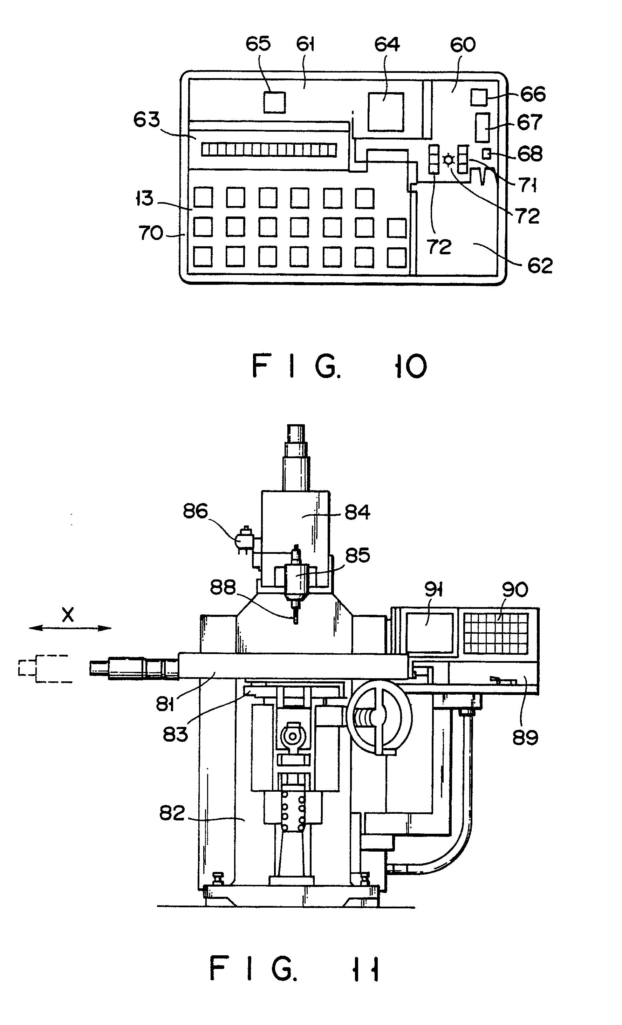

As shown in Fig. 10, an integrated circuit chip 64 constituting the IC card, which has a multifunction such as a function as calculator, a function as a watch, and the like, and a driver 65 of the liquid crystal display 63 are mounted on the main printed board 61 by TAB connection. The integrated circuit chip 64 has a CPU and a memory.

Fig. 10 is a view showing the inner structure of the IC card seen from the side of the front panel 20.

Also, in the printed circuit board 60, there are provided a C-NET 66, a crystal oscillator (electronic parts) 67, and a chip condenser 68.

Moreover, a contact 71 and withstand electrostatic element 72 are provided in the printed circuit board 60.

The contact 71 is projected to the surface of the back panel 30 through the opening 43 of the spacer 40 and the opening 17 of the back panel 30. The contact 71 is connected to the terminal inside the external device when the IC card is inserted into the external device.

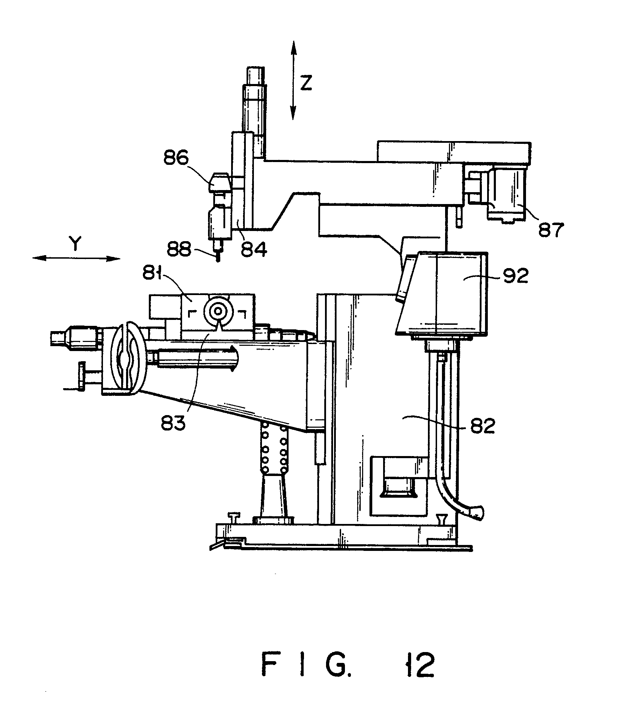

A cutting device for forming the above-mentioned emboss character will be explained with reference to Figs. 11 and 12.

The IC card 11 is fixed onto a table 81 as the emboss portion 23 is placed as a upper surface. The table 81 can be moved by a motor (not shown) in an illustrated X-axis direction to a main body 82, and also supported on a moving table 83 which can be moved in an illustrated Y-axis direction. Thereby, the table 81 can be moved in both X and Y-axis directions.

On the main body 82, a moving table 84 is supported to be movable in an illustrated Z-axis direction. A spindle 85 is rotatably supported in the moving table 84. The driving force of a motor 87 is transmitted to the spindle 85 via a repeater 86.

A drill 88 is fixed to the end portion of the spindle 85 and the emboss portion 23 on the card 11 is cut by the drill 88.

The movement of the table 81 in the X and Y-axes directions and that of the drill 88 in the Z-axis direction can be controlled, thereby the emboss portion 23 is arbitrarily cut and a desired emboss character (embossing pattern) can be formed.

The cutting of such emboss portion 23 is controlled by an input controller 89 provided in the main body 82. The input controller 89 comprises a keyboard 90 for inputting data (data of emboss character 16 to be cut) and a display 91 for displaying data, and a controller 92.

The controller 92 stores the position of the emboss portion 23 on the card 11, and calculates a character pattern to be formed, a cutting position, a depth of cutting based on the stored contents. Moreover, the controller 92 controls the movement of the table 81 in the X and Y-axes directions and that of the drill 88 in the Z-axis direction, and the rotation of the spindle 85 based on the calculated result.

As shown in Fig. 4, the emboss character formed by the above-mentioned device has the two-layered structure having the transparent resin layer and the colored resin layer. Thereby, the colored portion of the emboss character can be formed to have a certain degree of thickness. Therefore, even if the surface of the emboss character is cut a little during the use of IC card, the color does not fade and the emboss character can be easily read for a long time.

Since the emboss character is cut as mentioned above, the emboss character can be formed without giving mechanical and thermal shock to the card, and the height of the emboss character can be substantially uniform.

Moreover, the emboss character formed by the above-mentioned cutting has substantially the same physical characteristic as plastic material constituting the card material such as vinyl chloride. Due to this, such the emboss character is the substantially the same as an emboss character formed by pressing in terms of its appearance and strength.

In the above embodiment, the emboss portion is formed by screen print. The present invention is not limited to this manner. For example, the following manner may be performed.

A frame is mounted on the card and transparent resin is cast therein. Then, transparent resin is hardened, thereafter a roller containing colored resin is rotated on the resin layer. Thereby, the colored resin is transferred.

Moreover, the present invention is not limited to the two-layered structure. It is possible to form the structure in which three or more resin layers are overlay.

The above embodiment explained the case in which IC card is used. The present invention can be applied to the case in which a card having the other emboss portion such as a magnetic card is used.

Additionally, the present invention, of course, can be applied to various modifications within the range in which the gist of the invention is not changed.

**Claims**

1. A card having an emboss portion, comprising:
   a card body (11); and
   an emboss portion (23) formed on said card body (11), said emboss portion (23) having a transparent first resin layer (24) and a colored second resin layer (25) formed on said first resin layer (24),
   wherein an embossing pattern (16) having said two resin layers (24, 25) is formed by cutting said emboss portion (23) into a desired pattern.

2. A card according to claim 1, characterized in that said first and second resin layers (24, 25) have photosensitive resin, and said photosensitive resin is hardened by ultraviolet light radiation.

3. A card according to claim 1, characterized in that said card body (11) has a semiconductor chip (64).

4. A card according to claim 3, characterized in that said semiconductor chip (64) has a CPU and a memory.

5. A card according to claim 4, characterized in that said card body has input means (13) for inputting data, and display means (14, 63) for displaying data.

6. A method for manufacturing a card having an emboss portion, comprising the steps of:
   forming a transparent resin layer (24) on an emboss portion (23) of a card body (11);
   forming a colored resin layer (25) on said transparent resin layer (24); and
   forming a desired embossing pattern (16) by cutting said two layers (24, 25) of said emboss portion (23).

7. A method according to claim 6, characterized in that said two resin layers (24, 25) are formed by a screen print.

8. A method according to claim 6, characterized in that said two resin layers (24, 25) have photosensitive resin, and said photosensitive resin is hardened by ultraviolet light radiation.

9. A method according to claim 6, characterized in that said cutting process is performed to leave a part of said transparent resin layer (24).

10. A card with an emboss portion, comprising:
    a card body (11); and
    an embossing pattern (16), formed on said card body (11), on which at least two resin layers (24, 25) are stacked,
    wherein said embossing pattern (16) is formed by cutting an emboss portion (23) into a desired pattern.

11. A card according to claim 10, characterized in that said card body includes a magnetic memory means for storing magnetic data.

EP 0 434 974 A1

F I G. 1

F I G. 2

F I G. 3

F I G.  4

| FRONT PANEL | STEP 1 |
| ADHERING TRANSPARENT PHOTOSENSITIVE RESIN | STEP 2 |
| ADHERING COLORED PHOTOSENSITIVE RESIN | STEP 3 |
| ASSEMBLING CARD | STEP 4 |
| CUTTING EMBOSS PORTION | STEP 5 |

F I G.  5

F I G. 6

F I G. 7

F I G. 8

F I G.    9

F I G. 10

F I G. 11

F I G. 12

**European Patent Office**

# EUROPEAN SEARCH REPORT

Application Number

**EP 90 12 2205**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN vol. 13, no. 477 (M-885), 27 October 1989; & JP - A - 1188250 (TOSHIBA CORP.) 27.07.1989 * the whole document * | 1,4,6,10 | G 06 K 19/077 |
| A | PATENT ABSTRACTS OF JAPAN vol. 13, no. 535 (M-899), 29 November 1989; & JP - A - 1218892 (TOSHIBA CORP.) 01.09.1989 * the whole document * | 1-3,6,8, 10 | |
| A | DE-A-3 801 563   (K.K. TOSHIBA) * figures 9-11 * | 1,4-6,10 | |

TECHNICAL FIELDS
SEARCHED (Int. Cl.5)

G 06 K

The present search report has been drawn up for all claims

| Place of search | Date of completion of search | Examiner |
|---|---|---|
| Berlin | 21 February 91 | ZOPF K |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document